# EUROPEAN PATENT APPLICATION

(11) **EP 2 213 518 A1**
(43) Date of publication of application: **04.08.2010**
(21) Application number: 08847552.0
(22) Date of filing: 09.09.2008
(51) Int. Cl.: B60R 11/02, B60K 35/00, G09G 5/00, G09G 5/36

(54) **DISPLAY SYSTEM, DISPLAY DATA OUTPUT DEVICE, DISPLAY CONTROL DEVICE, DISPLAY CONTROL METHOD, DISPLAY CONTROL PROGRAM, AND COMPUTER-READABLE RECORDING MEDIUM**

(30) Priority: 06.11.2007 JP 2007289071
(71) Applicant: Sharp Kabushiki Kaisha, Osaka-shi, Osaka 545-8522 (JP)
(72) Inventor: HAMACHI, Jun, Nagaike-cho, Abeno-ku Osaka-shi OSAKA 545-8522 (JP); FUJIMOTO, Fumiaki, Nagaike-cho, Abeno-ku Osaka-shi OSAKA 545-8522 (JP)
(74) Representative: Müller-Boré & Partner Patentanwälte
(86) International application number: PCT/JP2008/066247
(87) International publication number: WO 2009/060660

(57) **Abstract**

A display system of the present invention includes a liquid crystal platform section (200). The liquid crystal platform section (200) includes (i) a Flash ROM (203) which stores data required for a liquid crystal wide instrument panel (100) to display all scenes, (ii) a RAM (204) which stores code image data sent from the Flash ROM (203), and (iii) a DIC (201) which generates the display data in accordance with the code image data sent to the RAM (204). In startup of the display system, the DIC (201) causes (i) only data of an image, out of data stored in Flash ROM (203), which image is to be displayed at startup of the display system to be sent to the RAM (204), and (ii) the display data to be generated in accordance with the data which has been sent to the RAM (204). The display system is arranged so as to employ as many existing hardware as possible, which can improve its operability by shortening the time required for the first scene to start to be displayed after the startup of the display system.

## Description

### Technical Field

The present invention relates to a display system for a movable object such as a vehicle which is steerable.

### Background Art

In these years, a display system for an instrument panel of a vehicle such as an automobile has been proposed. According to such a display system, (i) information for supporting driving, such as a navigation image, is displayed as an adjunctive image on a display (display section), in addition to (ii) state information of a vehicle such as a traveling speed and/or engine revolutions.

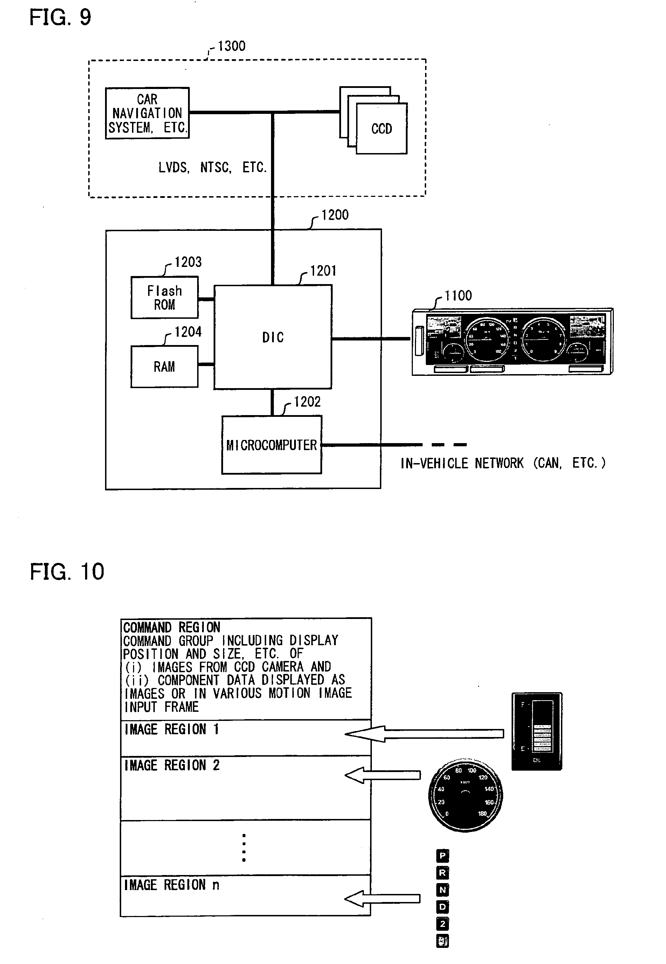

For example, Patent Literature 1 discloses a display system which includes: a liquid crystal wide instrument panel 1100 serving as a display device; a liquid crystal platform section 1200, serving as a display data output device, which supplies display data to the liquid crystal wide instrument panel 1100; and an input stream section 1300 which supplies, to the liquid crystal platform section 1200, image data for generating display data (see Fig. 9).

The liquid crystal wide instrument panel 1100 (i) is used as an instrument panel of an automobile, (ii) includes a liquid crystal display panel having a horizontally long shape (e.g., an aspect ratio is three to seven or more), and (iii) displays an image in accordance with display data supplied from the liquid crystal platform section 1200.

The liquid crystal platform section 1200 includes a DIC (Digital Image Composer) 1201 which generates display data and a microcomputer 1202 which controls the DIC 1201. The DIC 1201 is connected to a Flash ROM 1203 and a RAM 1204.

The Flash ROM 1203 connected to the DIC 1201 stores in advance (i) code data for controlling the DIC 1201 and (ii) image data to be used in displaying. For example, the Flash ROM 1203 stores code/image data as shown in Fig. 10.

In accordance with a command sent from the microcomputer 1202, the DIC 1201 processes the code/image data stored in the Flash ROM 1203. This allows the liquid crystal wide instrument panel 1100 to arbitrarily layout and display images (e.g., images on a car navigation system or CCD camera images) sent from the input stream section 1300.

The microcomputer 1202 receives various information (movable object information such as a traveling speed and/or a remaining amount of fuel) from the automobile via an in-vehicle network (e.g., CAN: Computer Aided Manufacturing). The microcomputer 1202 determines a scene to be selected in accordance with the information, and sends, to the DIC 1201, an index number of the scene as a command. This causes the liquid crystal wide instrument panel 1100 to change its display layout.

Fig. 10 illustrates an example of a structure of the code/image data. As shown in Fig. 10, a command group which causes a layout in the instrument panel is stored in a headmost command region. Moreover, image data of components for the layout is stored in an image region 1, an image region 2..., which follow the headmost command region.

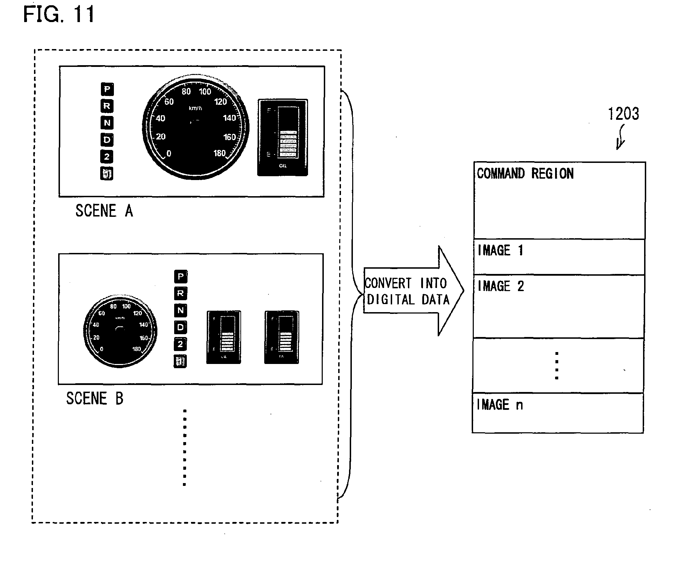

As shown in Fig. 11, the code/image data is data which is obtained by converting a display image corresponding to each scene into digital data.

The DIC 1201 reads out code/image data corresponding to each scene, and then supplies display data of the corresponding scene to the liquid crystal wide instrument panel 1100.

The DIC 1201 reads out the code/image data from the RAM 1204 in response to a command, supplied from the microcomputer 1202, indicative of a selection of scenes.

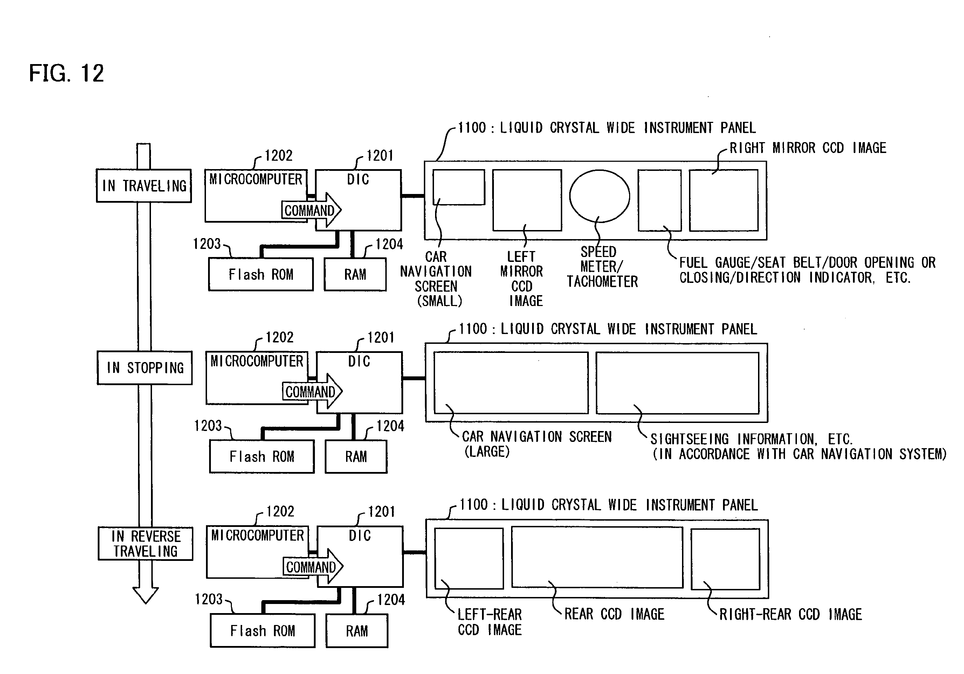

Fig. 12 shows examples of displays of the liquid crystal wide instrument panel 1100 in traveling, stopping, and reverse traveling. These states are, for example, regarded as three scenes.

First, a screen display during traveling is described. As shown in Fig. 12, a display screen is divided into five regions, during traveling. It is assumed that the liquid crystal wide instrument panel 1100 has first through fifth regions in this order from the left when viewed from a driver seat. The first region serves as a car navigation screen (small), the second region serves as a left mirror CCD screen, the third region serves as a speed meter/tachometer screen, the fourth region serves as a screen for fuel gauge/seat belt/opening or closing of door/direction indicator, and the fifth region serves as a right mirror CCD screen. Generations of display data for displaying such screens are described later.

The selection of the three scenes is carried out in accordance with an event. The event intends to, for example, an action such as turning left or right during the traveling.

The microcomputer 1202 selects an appropriate scene in accordance with data in the in-vehicle network (e.g., CAN), and then transmits to the DIC 1201, as a command, the number of the selected scene.

Upon receipt of such a command, the DIC 1201 (i) reads out, from the RAM 1204, code/image data corresponding to the selected scene, (ii) generates display data from the code/image data, and then (iii) supplies the display data to the liquid crystal wide instrument panel 1100.

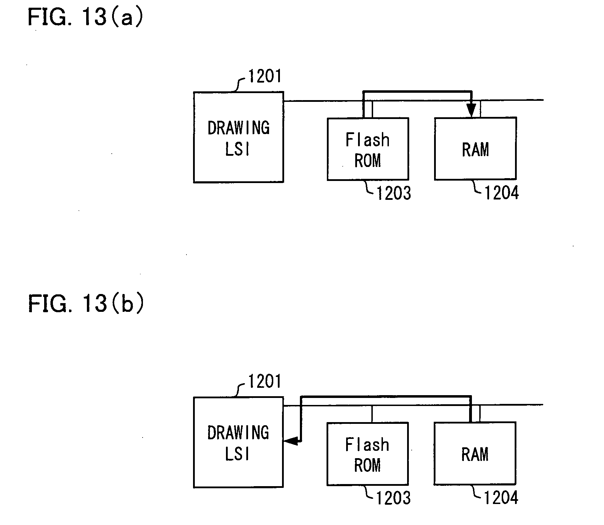

The following describes an operation in starting of the DIC 1201 with reference to Figs. 13(a) and 13(b).

First, as shown in Fig. 13(a), the DIC 1201 (LSI for drawing) sends, to the RAM 1204, starting data including various kinds of data in the Flash ROM 1203.

Next, as shown in Fig. 13(b), the DIC 1201 (LSI for drawing) (i) reads out the starting data which has been sent to the RAM 1204, (ii) carries out settings of initializations, and then (iii) supplies display data to the liquid crystal wide instrument panel 1100.

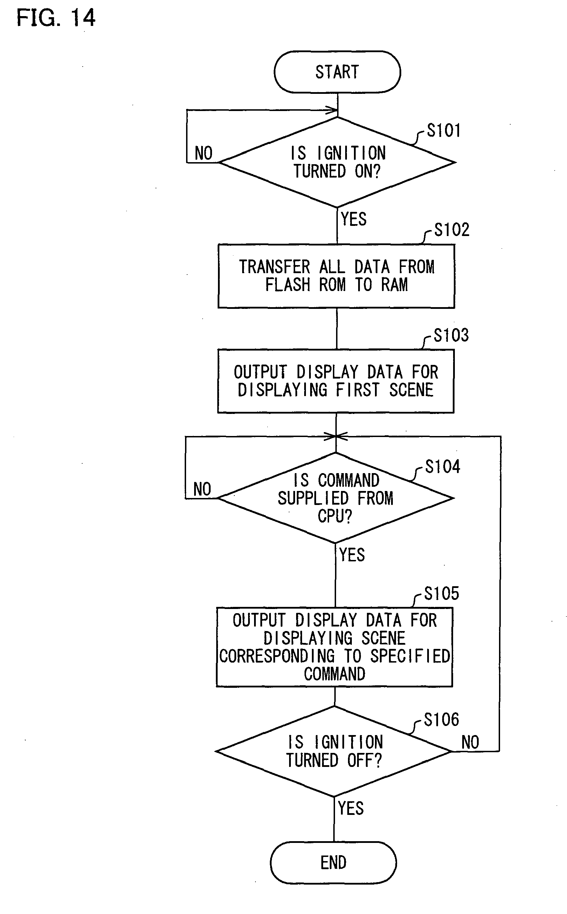

Fig. 14 is a flowchart illustrating a display processing flow carried out in a display system shown in Fig. 9.

First, it is judged whether or not an ignition is turned on (step S101). In a case where the ignition is turned on, the system is up and run, and the DIC 1201 sends all data stored in the Flash ROM 1203 to the RAM 1204 (step S102). This is specifically illustrated in Fig. 13(a).

Next, the DIC 1201 (i) reads out code/image data stored in the RAM 1204, (ii) generates display data for displaying a first scene, and then (iii) supplies the display data to the liquid crystal wide instrument panel 1100 serving as a display device (step S103).

This is specifically illustrated in Fig. 13(b). In accordance with obtained information on movable object, the microcomputer 1202 causes the DIC 1201 to read out the code/image data stored in the RAM 1204. Then, the DIC 1201 generates display data from the code/image data thus read-out, and then supplies the display data to the liquid crystal wide instrument panel 1100.

Then, while displaying the first scene, the DIC 1201 judges whether or not a command is supplied from the microcomputer 1202 (step S104). In a case where the DIC 1201 judges that a command is supplied from the microcomputer 1202, the process proceeds to a step S105.

In the step S105, the DIC 1201 (i) reads out, from the RAM 1204, code/image data of a scene corresponding to the specified command, (ii) generates display data for displaying the scene, and then (iii) supplies the display data to the liquid crystal wide instrument panel 1100 serving as a display device.

Then, it is judged whether or not the ignition is turned off (step S106). In a case where it is determined that the ignition is turned off, the process is ended. Whereas, in a case where it is determined that the ignition is not turned off, the process proceeds to the step S104, and the DIC 1201 waits for a command supplied from the microcomputer 1202.
Patent Literature 1
   International Publication No. WO 2006/022191 A1 (publication date: March 2, 2006)

### Summary of Invention

As described above, in startup of the display system, the DIC 1201 does not allow the liquid crystal wide instrument panel 1100 to display, till the DIC 1201 is in a state illustrated in Fig. 13 (b). Accordingly, it is necessary to shorten, as short as possible, a time required for reaching a state illustrated in Fig. 13 (a), that is, a time required for completing sending of data from the Flash ROM 1203 to the RAM 1204.

However, according to the conventional display system, before a first scene is displayed after the startup of the system, the code/image data for displaying all the scenes is sent, in block, from the Flash ROM 1203 to the RAM 1204. Accordingly, it takes long time for the DIC 1201 to start to display the first scene. This causes insufficiency in view of operability.

In order to shorten the time required for the first scene to start to be displayed after the startup of the liquid crystal instrument panel system, it would be effective to improve a performance of the DIC 1201. In order to improve the capability of the DIC 1201, it is necessary to employ a high-performance CPU.

However, since such a high-performance CPU is extremely expensive, cost for the whole system is increased.

Moreover, a high-performance CPU leads to a decrease in reliability, and further leads to a problem of safety.

The present invention is accomplished in view of the problems, and its object is to provide a display system, arranged so as to employ as many existing hardware as possible, which can improve its operability by shortening the time required for the first scene to start to be displayed after the startup of the display system.

In order to attain the object, a display system of the present invention is a display system for use in a movable object which is steerable, including: a display device which displays, as images, plural kinds of information regarding the movable object; and a display data output device which supplies, for each preset scene, an image to be displayed by the display device to the display device, the display data output device including: a first memory section which stores data required for the display device to display all scenes; a second memory section which stores data sent from the first memory section; and a display data generating means for (i) generating display data, when obtaining information regarding the movable object, by reading out data, from the data sent to the second memory section, corresponding to information obtained regarding the movable object, and (ii) supplying the display data to the display device, the display data generating means causing (i) only data of an image, out of the data stored in the first memory section, which image is to be displayed at startup of the display system to be sent to the second memory section at the startup of the display system and (ii) the display data to be generated in accordance with the data which has been sent to the second memory section.

According to the configuration, the display data generating means causes (i) only data of an image, out of the data stored in the first memory section, which image is to be displayed at startup of the display system to be sent to the second memory section at the startup of the display system and (ii) the display data to be generated in accordance with the data which has been sent to the second memory section. Accordingly, the display data generating means does not need to wait until all the data stored in the first memory section is sent to the second memory section. This makes it possible to shorten the time required for the first scene to start to be displayed after the startup of the display system.

It may be possible that: the first memory section stores data required for displaying each scene in addition to data relating to startup of the display system; and after the startup of the display system, the display data generating means (i) causes, when obtaining information relating to a scene, data corresponding to the scene to be sent from the first memory section to the second memory section and (ii) generates the display data in accordance with the data which has been sent to second memory section.

After the startup of the display system, the display data generating means (i) causes, when obtaining information relating to a scene, data corresponding to the scene to be sent from the first memory section to the second memory section, and (ii) generates the display data in accordance with the data which has been sent to second memory section. Accordingly, it is not necessary to use a high-performance CPU. Alternatively, a conventional CPU, which can be stably driven, is sufficient in order to carry out highspeed data sending from the first memory section to the second memory section. This makes it possible to prevent a decrease in reliability of the system, whereby safety of a movable object including the display system can be secured.

It may be possible that: after the startup of the display system, the display data generating means (i) judges, when obtaining information relating to a scene, whether or not data corresponding to the scene is stored in the second memory section, (ii) causes the data to be sent from the first memory section to the second memory section, in a case where it is determined that the data is not stored in the second memory section, and (iii) reads out the data from the second memory section so as to generate the display data in accordance with the data thus read out, in a case where it is determined that the data is stored in the second memory section.

According to the configuration, data which has been sent once does not need to be sent again. Accordingly, a scene display process can be speeded up.

It may be possible that: the data, stored in the first memory section, of an image to be displayed at the startup of the display system is made up of data in which (i) frequency of use in displaying each scene is not less than a predetermined number of times and (ii) a data capacity is not more than a predetermined capacity.

It may be possible that: the data, stored in the first memory section, of an image to be displayed at the startup of the display system is determined based on a relation between (i) capacity of data sent from the first memory section to the second memory section and (ii) time required for sending the data.

It may be possible that: the display data generating means includes a simplified sequencer, and the simplified sequencer sends data stored in the first memory section to the second memory section.

According to the configuration, the burden of the CPU can be reduced.

### Brief Description of Drawings

Fig. 1

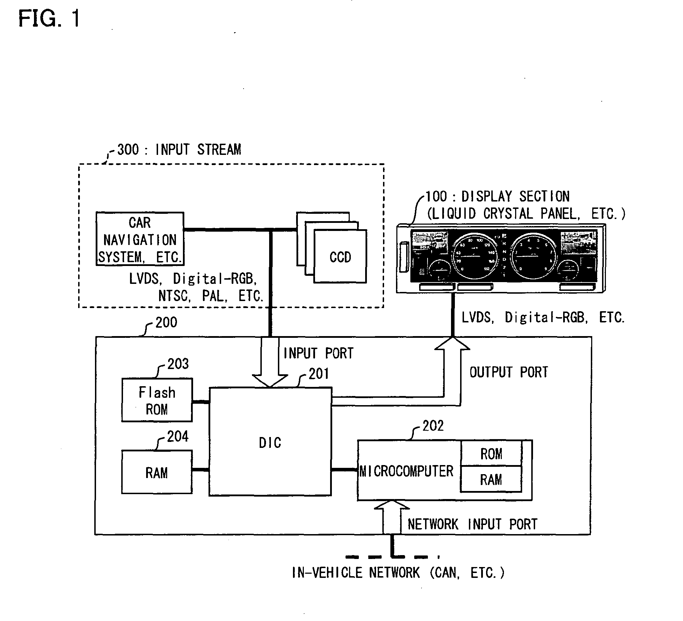

   Fig. 1 is a block diagram illustrating a main structure of a display system, according to an embodiment of the present invention.
Fig. 2

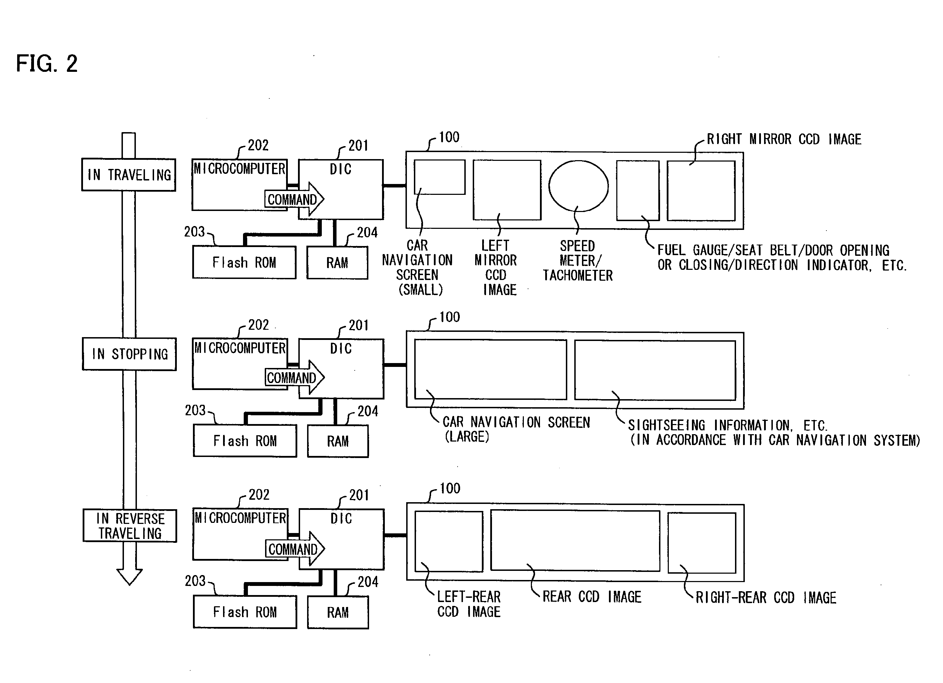

   Fig. 2 is a view illustrating a correspondence between each scene and converted digital data.
Fig. 3

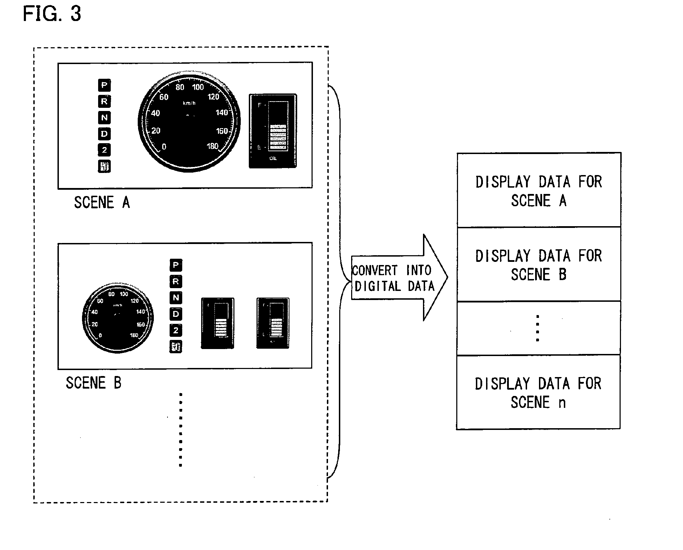

   Fig. 3 is a view illustrating a correspondence between each scene and converted digital data.
Fig. 4

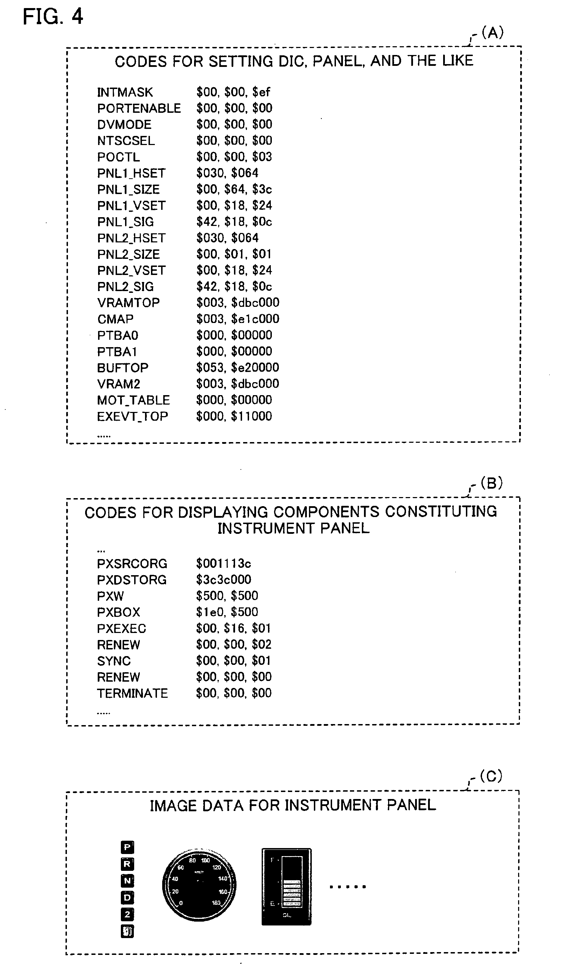

   Fig. 4 is an explanatory view illustrating a structure of display data.
Fig. 5

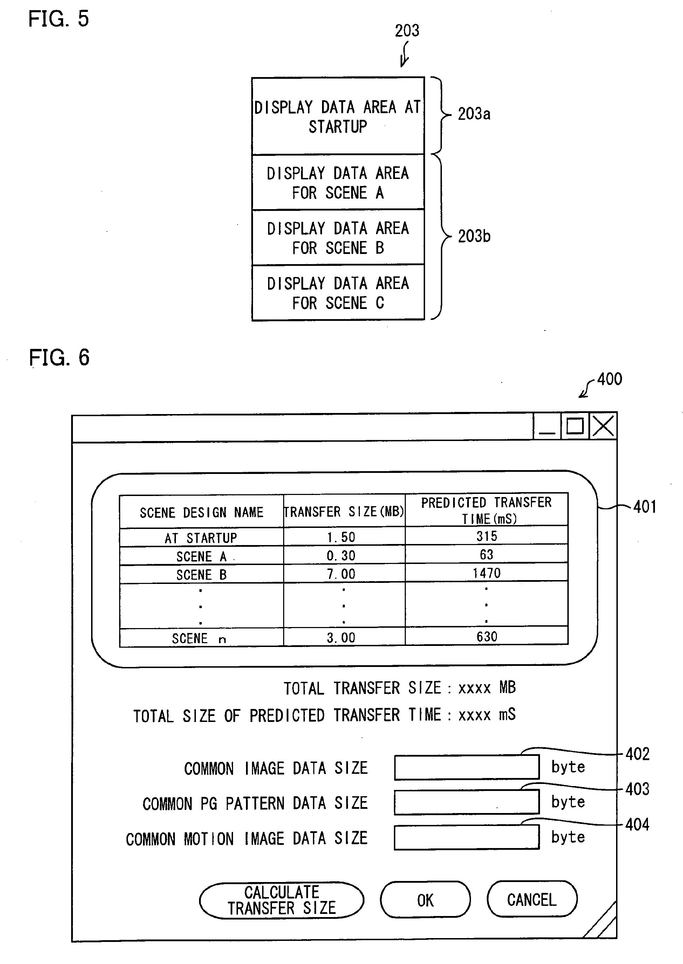

   Fig. 5 is a view illustrating a data structure of a Flash ROM in the display system shown in Fig. 1.
Fig. 6
   Fig. 6 is a view illustrating a selection supportive tool for common data.
Fig. 7

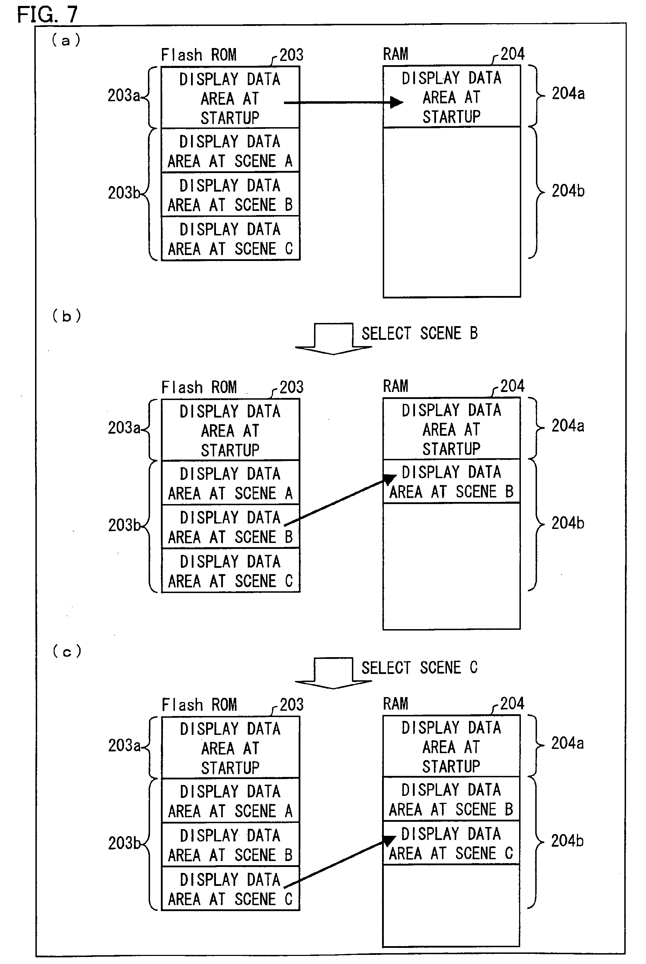

   Fig. 7 is a view illustrating a sending procedure of code image data from a Flash ROM to a RAM in the display system shown in Fig. 1.
Fig. 8

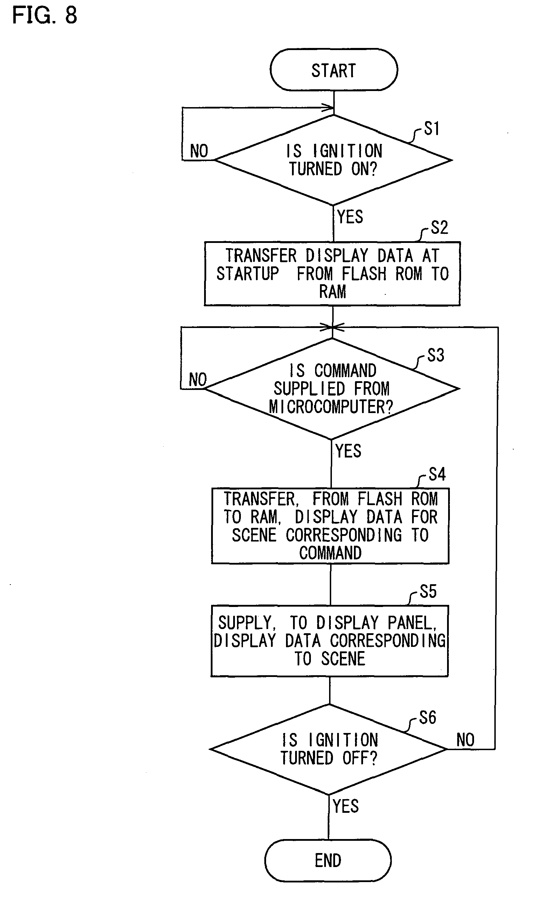

   Fig. 8 is a flowchart illustrating a process flow of generating and outputting display data by a DIC included in the display system shown in Fig. 1.
Fig. 9
   Fig. 9 is a block diagram illustrating a main structure of a conventional display system.
Fig. 10
   Fig. 10 is a view illustrating data storing areas in the Flash ROM shown in Fig. 9.
Fig. 11
   Fig. 11 is a view illustrating a correspondence between each scene and converted digital data.
Fig. 12
   Fig. 12 is a view illustrating display examples of a liquid crystal wide instrument panel during traveling, stopping, and reverse traveling.
Fig. 13(a)
   Fig. 13(a) is a view illustrating a sending procedure of code image data from the Flash ROM to the RAM in the display system shown in Fig. 9.
Fig. 13(b)
   Fig. 13(b) is a view illustrating a sending procedure of code image data from the Flash ROM to the RAM in the display system shown in Fig. 9.
Fig. 14
   Fig. 14 is a flowchart illustrating a process flow of generating and outputting display data by a DIC included in the display system shown in Fig. 9.
Fig. 15(a)

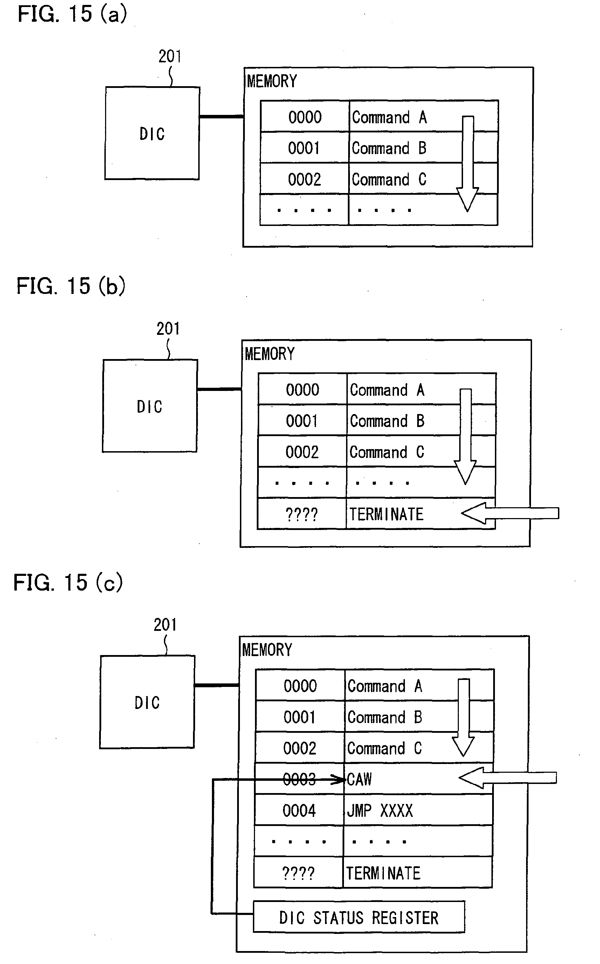

   Fig. 15(a) is an explanatory view illustrating an operation of a simplified sequencer.
Fig. 15(b)
   Fig. 15(b) is an explanatory view illustrating an operation of a simplified sequencer.
Fig. 15(c)
   Fig. 15(c) is an explanatory view illustrating an operation of a simplified sequencer.

### Description of Embodiments

The following description discusses an embodiment of the present invention.

The present embodiment discusses an example in which a display system of the present invention is applied to a liquid crystal instrument panel system used as an instrument panel of an automobile which is one of steerable movable objects.

As shown in Fig. 1, the liquid crystal instrument panel system of the present embodiment includes: a liquid crystal wide instrument panel 100 serving as a display section; a liquid crystal platform section (display data output device) 200 which supplies display data to the liquid crystal wide instrument panel 100; and an input stream section 300 which supplies, to the liquid crystal platform section 200, a part of an image necessary to generate display data.

The liquid crystal wide instrument panel 100 displays, as images, a plurality of pieces of information containing ever-changing movable object information (vehicle information) of an automobile (movable object) in accordance with elapse of time.

For example, the liquid crystal wide instrument panel 100 (i) is used as an instrument panel of an automobile, (ii) includes a liquid crystal display panel having a horizontally long shape (e.g., an aspect ratio is three to seven or more), and (iii) displays an image in accordance with display data supplied from the liquid crystal platform section 200.

The liquid crystal platform section 200 supplies, for each preset scene, an image to be displayed on the liquid crystal wide instrument panel 100 to the liquid crystal wide instrument panel 100.

More specifically, for example, the liquid crystal platform section 200 includes: a DIC 201 which generates the display data; a microcomputer 202, serving as a control means, which controls the DIC 201; and Flash ROM 203 and RAM 204 which are connected to the DIC 201.

The microcomputer 202 obtains an appropriate scene (described later) from vehicle information (information such as a traveling speed, a remaining amount of fuel, and/or a rotation angle of a steering wheel) obtained from an in-vehicle network (e.g., CAN) via a network input port. Then, the microcomputer 202 supplies to the DIC 201, as a command, an index number of the scene thus obtained.

The microcomputer 202 includes a ROM which stores a program for controlling the microcomputer 202 itself. Moreover, the RAM in the microcomputer 202 secures a working area, etc. which is required for the microcomputer 202 to operate.

The DIC 201 generates display data corresponding to a scene specified by the command supplied from the microcomputer 202. The display data is generated in accordance with (i) stream information (such as a car navigation image and/or a CCD camera image) supplied from the input stream section 300 via an input port and (ii) display data stored in the RAM 204. Then, the DIC 201 supplies generated display data to the liquid crystal wide instrument panel 100 via an output port. A detail of the display data stored in the RAM 204 is described later.

The Flash ROM 203 (first memory section) stores plural kinds of display data which have respective different display condition information. That is, the Flash ROM 203 stores data required for displaying each scene, in addition to data relevant to the startup of the liquid crystal instrument panel system.

The RAM 204 (second memory section) temporarily stores display data stored in the Flash ROM 203.

The microcomputer 202 controls a sending of the display data from the Flash ROM 203 to the RAM 204. That is, the microcomputer 202 carries out a control so that display data stored in the RAM 204 is to be sent to the RAM 204 at a predetermined timing.

More specifically, when the microcomputer 202 obtains the vehicle information, the microcomputer 202 supplies to the DIC 201, a command which causes the DIC 201 to send, from the Flash ROM 203 to the RAM 202, display data required for generating display data of the scene selected in accordance with the vehicle information.

Fig. 2 shows examples of how the liquid crystal wide instrument panel 100 displays during traveling, stopping, and reverse traveling. These correspond, for example, to respective three scenes.

First, a screen display during traveling is described. As shown in Fig. 2, during traveling, the display screen has first through fifth regions in this order from the left when viewed from a driver seat. The first region serves as a car navigation screen (small), the second region serves as a left mirror CCD screen, the third region serves as a speed meter/tachometer screen, the fourth region serves as a screen for fuel gauge/seat belt/door opening or closing/direction indicator, and the fifth region serves as a right mirror CCD screen. The following describes generations of display data for displaying such a screen.

The selection of the three scenes is carried out in accordance with an event. The event intends to, for example, an action such as turning left or right during traveling.

The microcomputer 202 selects an appropriate scene in accordance with data received via the in-vehicle network (e.g., CAN), and then transmits to the DIC 201, as a command, the number of the scene thus selected.

Upon receipt of the command, the DIC 201 (i) sends, to the RAM 204, display data of the scene stored in the Flash ROM 203, (ii) reads out the display data from the RAM 204, (iii) generates, from the display data thus read-out, display data of the scene, and then (iv) supplies the display data thus generated to the liquid crystal wide instrument panel 100.

When a first scene is displayed on the liquid crystal wide instrument panel 100 for the first time after startup of the system, display data needs to be sent from the Flash ROM 203 to the RAM 204, as described above. However, when scenes following the first scene are subsequently displayed, the DIC 201 directly reads out, from the RAM 204, display data of the scene in response to a command. This makes it possible to speed-up a display. Note that details of sending of display data from the Flash ROM 203 to RAM 204 are described later.

As shown in Fig. 3, display data corresponding to each scene is data obtained by a conversion in which a display image (command such as a display position) corresponding to each scene is converted into digital data. Such a conversion is carried out in advance in a design stage of the display system.

As shown in Fig. 4, the display data includes three elements (A), (B), and (C).

The element (A) indicates codes for settings of the DIC 201, a panel, and the like. More specifically, the element (A) includes information, as operation codes and operands, such as those related to (i) initialization of various registers in the DIC 201 itself and (ii) a display setting of the connected liquid crystal wide instrument panel 100.

The element (B) indicates codes for displaying each of components included in the instrument panel. More specifically, the element (B) carries out (i) BitBlt (bit block transfer) of an image region of the element (C) with respect to a display buffer of the DIC 201, and (ii) setting of a region for displaying information sent from electronic devices such as a CCD camera connected to an input port of the DIC 201.

The element (C) indicates image data for the instrument panel.

Out of the elements (A) through (C), the elements (A) and (B) are small in size. Accordingly, the elements (A) and (B) are included in "display data for startup" which is sent to the RAM 204 at the startup of the DIC 201. On the other hand, since the element (C) is large in size, it is read in as "display data for each scene" in the selection of scenes. More specifically, each of the elements (A) and (B) has a size of, for example, approximately several tens of bytes.
Whereas the element (C) has a size in a range of, for example, several kilobytes to several tens of megabytes.

Fig. 5 illustrates data areas in the Flash ROM 203. More specifically, the Flash ROM 203 includes a display data area 203a for startup and a display data area 203b for scene.

The display data area 203a stores data to be supplied to the liquid crystal wide instrument panel 100 at the startup of the display system. For example, the elements (A) and (B) of the display data shown in Fig. 4 are stored in the display data area 203a. That is, the display data area 203a stores a relatively small data which has such a size that it does not take long to send the data from the Flash ROM 203 to RAM 204.

On the other hand, the scene display data area 203b stores image data to be displayed in each scene. For example, the element (C) of the display data shown in Fig. 4 is stored in the display data area 203b. That is, the display data area 203b stores relatively large data which has such a size that it takes long to send the data from the Flash ROM 203 to RAM 204.

Common data which is to be stored in the display data area 203a of the Flash ROM 203 may be selected by the following two methods.

### (a) Selection Method by Algorithm

(1) A user sets a "common data area size" (this should only be set by the user). Note that the common data area size intends to a summation of (i) a size of the display data area 203a shown in Fig. 5 and (ii) a size of display data to be sent to the RAM 204 at the startup of the system. It is possible to (i) reduce the time required for the startup of the system and (ii) adjust the time required for sending the data to the RAM 204 for each scene, by adjusting the common data area size, that is, by preferentially selecting data which is used in many scenes and has a small size.
(2) A data which has, alone, a size of not larger than the "common data area size" is selected as the common data. The data, alone, intends to display data for each scene.
(3) Data which is often referred to in different scenes is preferentially selected as the common data.
(4) In a case where the number of referring to one data in the scenes is identical to that of referring to another data, the data having a smaller size is preferentially selected as the common data.

### (b) Selection Method by User

(1) A user sets a "common data area size".
(2) The user selects data to be registered in a "common data area". Note that the user checks that a total size of the data thus selected is not larger than the "common data area size".

In the selection method by the algorithm (a), after the user sets only the "common data area size", common data is automatically extracted from display data for each scene.

In a case where the common data is thus extracted from the display data for each scene automatically, it is likely that data is selected adverse to the user's intention. In that case, the common data needs to be selected in accordance with the selection method (b) by user.

However, according to the selection method (b) by user, although it is possible to prevent selection of the common data which is adverse to the user's intention, it is necessary to carry out the checking while recognizing each size of the data. This leads to a problem of taking a lot of troubles.

In view of the problem, a supportive tool 400 for selecting common data can be used so as to support the user's selection, as shown in Fig. 6 for example.

The supportive tool 400 displays a sending size list 401 for each scene, total sending size, total size of predicted sending time, common image data size 402, common PG pattern data size 403, and common motion image data size 404. The user can enter the common image data size 402, the common PG pattern data size 403, and the common motion image data size 404.

The sending size list 401 for each scene is a list in which sending size (sending capacity) and sending time are displayed which are obtained based on values of "common image data size", "common PG patter data size", and "common motion image data size".

The total sending size is a summation of sending sizes in the "sending size list for each scene".

The total size of predicted sending time is a summation of predicted sending time in the "sending size list for each scene".

The common image data size 402 is an entry for entering the "common image data size". Note that a default is "0". Moreover, a data size is entered byte by byte.

The common PG pattern data size 403 is an entry for entering the "common PG pattern data size". Note that a default is "0". Moreover, a data size is entered byte by byte.

The common motion image data size 404 is an entry for entering the "common motion image data size". Note that a default is "0". Moreover, a data size is inputted byte by byte.

A data sending process described below is carried out by (i) selecting the common data through the operations, and then (ii) causing a data structure of the Flash ROM 203 to be in a state shown in Fig. 5.

In the Flash ROM 203, the display data area 203a for the startup serves as a common data area including a "common image data area" in which the common image data is stored, a "common PG pattern data area" in which the common PG pattern data is stored, and a "common motion image data area" in which the common motion image data is stored. That is, the common data serving as the display data of the startup includes common image data, common PG pattern data, and common motion image data.

Note that the criterion for selecting data of an image, stored in the Flash ROM 203, which is to be displayed at the startup of a liquid crystal instrument panel system can be to meet, for example, the following (i) and (ii): (i) frequency of use in displaying each scene is not less than a predetermined number of times; and (ii) a data capacity is not more than a predetermined capacity.

As described above, data of an image, stored in the Flash ROM 203, which is to be displayed at the startup of the liquid crystal instrument panel system can be selected based on an arbitrary criterion. This allows an increase in degree of freedom in designing a whole system.

The following describes a flow of data sending process with reference to Figs. 7 and 8.

First, in a flowchart shown in Fig. 8, it is judged whether or not an ignition is turned on (step S101). In a case where the ignition is turned on, the display system starts up, and then the DIC 201 causes the display data (common data) to be sent from the Flash ROM 203 to the RAM 204 (step S2).

More specifically, the DIC 201 causes the data, which is stored in the display data area 203a of the Flash ROM 203, to be sent to the display data area for startup in the RAM 204 (see (a) of Fig. 7).

Next, the DIC 201 (i) reads out the common data from the RAM 204, (ii) generates the display data for displaying a scene at the startup, and (iii) supplies the display data thus generated to the wide instrument panel 100 serving as a display device.

Then, the DIC 201 judges whether or not a command is supplied from the microcomputer 202, while the scene of the startup is being displayed (step S3). In a case where it is determined in the step S3 that a command is supplied from the microcomputer 202, the process proceeds to a step S4.

In the step S4, the DIC 201 causes data of a scene corresponding to the specified command to be sent from the display data area 203b of the Flash ROM 203 to the RAM 204.

More specifically, in a case where the scene corresponding to the command is, for example, a scene B, the DIC 201 causes data stored in a display data area 203b for scene B in the Flash ROM 203 to be sent to a display data area 204b for scene B in the RAM 204 (see (b) of Fig. 7).

Next, the DIC 201 (i) reads out the display data for scene B which has been sent to the RAM 204, (ii) generates display data for displaying the scene B, and (iii) supplies the display data thus generated to the liquid crystal wide instrument panel 100 serving as the display device (step S5).

Then, it is judged whether or not the ignition is turned off, while the scene B is being displayed (step S6). In a case where it is determined in the step S6 that the ignition is turned off, the process is ended. Whereas, in a case where it is determined in the step S6 that the ignition is not turned off, the process proceeds to the step S3, and the DIC 201 waits for a command supplied from the microcomputer 202.

For example, in a case where, while the scene B is being displayed, a command is supplied from the microcomputer 202 to the DIC 201 and a scene C is selected, the DIC 201 causes data stored in a display data area 203b for scene C in the Flash ROM 203 to be sent to a display data area 204b for scene C in the RAM 204 (see (c) of Fig. 7).

Then, the DIC 201 generates display data for the scene C and supplies the display data thus generated to the liquid crystal wide instrument panel 100.

In a case where the scene B is selected again while the scene C is being displayed after the scene B was displayed (i.e., in a case where the RAM 204 stores display data for the scenes B and C), the DIC 201 directly reads out the data (the data for the scene B) from the RAM 204, instead of sending the data from the Flash ROM 203 to the RAM 204. This allows quick selection of a target scene.

More specifically, after the sending logic from the Flash ROM 203 to the RAM 204 (data sending process for generating display data) is carried out, it is possible that the logic is not subsequently carried out by rewriting a command in the RAM in the microcomputer 202 with the use of a Nop (No Operation) command.

According to the liquid crystal instrument panel system of the present embodiment, display data stored in the Flash ROM 203 is categorized into common data and the other data, and then the common data is sent to the RAM 204 earlier than the other data. This makes it possible to speed up a display process at the startup.

This allows an improvement in operability of the liquid crystal instrument panel system.

Moreover, the DIC 201 (display data generating means) can include a simplified sequencer (see Figs. 15(a) through 15(c)).

According to the present invention, such a simplified sequencer needs to have at least three functions illustrated in Figs. 15(a) through 15(c).

As shown in Fig. 15(a), the simplified sequencer should have a function of sequentially executing a command group stored in a memory of the DIC 201 in the order of their increasing memory address. More specifically, the simplified sequencer should have an automatic command-execution function which sequentially carries out the commands in the order of their increasing memory addresses. For example, the simplified sequencer sequentially executes a command A stored at the lowest-numbered memory address "0000", a command B stored at a memory address "0001", a command C stored at a memory address "0002", ....

Moreover, as shown in Fig. 15(b), the simplified sequencer should have a command for terminating the sequential execution of the commands. More specifically, as shown in Fig. 15(b), the simplified sequencer should have a function of terminating a command, which is being automatically executed, in accordance with a TERMINATE command stored at a certain memory address.

Moreover, as shown in Fig. 15(c), the simplified sequencer should have a command for causing conditional branch according to an execution state of the DIC 201. As shown in Fig. 15(c), the simplified sequencer has a function of carrying out conditional branch in accordance with a CAW command stored at a certain memory address (e.g., 0003), with reference to a status register of the DIC 201. More specifically, according to the conditional branch, when a flag is on, a step of JMP, which is stored at the next memory address (e.g., 0004) is skipped, whereas when the flag is off, the command JMP stored at the next memory address (0004) is executed.
The sequencer having at least the three functions causes data, which is stored in the Flash ROM 203 (first memory section), to be sent to the RAM 204 (second memory section). Since the DIC 201 includes the simplified sequencer, it is possible to reduce the burden of the microcomputer 202
(CPU).

The following describes effects brought about by the present embodiment.

The liquid crystal instrument panel system of the present embodiment is a display system mounted on a movable object which can be controlled, the display system including: a display device (liquid crystal wide instrument panel 100) which displays, as images, plural kinds of information regarding the movable object; and a display data output device (liquid crystal platform section 200) which supplies, to the liquid crystal wide instrument panel 100, for each predetermined scene, display data of an image to be displayed by the liquid crystal wide instrument panel 100, the liquid crystal platform section 200 including: a first memory section (Flash ROM 203) which stores data required for displaying all scenes to be displayed by the liquid crystal wide instrument panel 100; a second memory section (RAM 204) which stores the data sent from the Flash ROM 203; and a display data generating means (DIC 201) which (i) generates the display data by obtaining information regarding the movable object and reading out data, from the data sent to the RAM 204, corresponding to the obtained information, and (ii) supplies the generated display data to the liquid crystal wide instrument panel 100, the DIC 201, in starting the liquid crystal instrument panel system, (i) sending, to the RAM 204, only data of an image to be displayed in starting the liquid crystal instrument panel system among data stored in the Flash ROM 203 and (ii) generating the display data from data which has been sent.

According to the configuration, the DIC 201 causes (i) only data of an image, out of the data stored in the Flash ROM 203, which is to be displayed at startup of the liquid crystal instrument panel system to be sent to the RAM 204 at the startup of the liquid crystal instrument panel system and (ii) the display data to be generated in accordance with the data which has been sent to the RAM 204. Accordingly, the DIC 201 does not need to wait until all the data stored in the Flash ROM 203 is sent to the RAM 204. This makes it possible to shorten the time required for the first scene to start to be displayed after the startup of the liquid crystal instrument panel system.

The present invention is not limited to the description of the present embodiments above, but can be modified by a skilled person in the art within the scope of the claims. An embodiment derived from a proper combination of technical means disclosed in respective different embodiments is also encompassed in the technical scope of the present invention.

Finally, the blocks of the liquid crystal platform section 200, in particular, the DIC 201 can be configured by hardware or can be realized by software with the use of a CPU as follows:
The DIC 201 includes a CPU (central processing unit), a ROM (read only memory), a RAM (random access memory), and a memory device (memory medium) such as a memory. The CPU executes instructions in control programs for realizing each function. The ROM stores the programs, the programs are loaded on the RAM, and the memory device stores programs and various data. The object of the present invention can also be achieved, by (i) providing to the DIC 201 a computer-readable storage medium storing control program codes (executable program, intermediate code program, and source program) for the DIC 201, serving as software for realizing the foregoing respective functions, and then (ii) causing the computer (or CPU or MPU) to read out and execute the program codes from the computer-readable storage medium.

The storage medium can be, for example, a tape, such as a magnetic tape or a cassette tape; a disk including (i) a magnetic disk such as a floppy (Registered Trademark) disk or a hard disk and (ii) an optical disk such as CD-ROM, MO, MD, DVD, or CD-R; a card such as an IC card (memory card) or an optical card; or a semiconductor memory such as a mask ROM, EPROM, EEPROM, or Flash ROM.

Alternatively, the DIC 201 can be arranged to be connectable to a communications network so that the program codes are delivered over the communications network. The communications network is not limited to a specific one, and therefore can be, for example, the Internet, an intranet, extranet, LAN, ISDN, VAN, CATV communications network, virtual private network, telephone line network, mobile communications network, or satellite communications network. The transfer medium which constitutes the communications network is not limited to a specific one, and therefore can be, for example, wired line such as IEEE 1394, USB, electric power line, cable TV line, telephone line, or ADSL line; or wireless such as infrared radiation (IrDA, remote control), Bluetooth (Registered Trademark), 802.11 wireless, HDR, mobile telephone network, satellite line, or terrestrial digital network. Note that, the present invention can be realized by a computer data signal (i) which is realized by electronic transmission of the program code and (ii) which is embedded in a carrier wave.

### Industrial Applicability

A display system of the present invention can be widely used as an information display system for use in a vehicle such as an automobile or a train, an airplane, a ship, or the like.

## Claims

1. A display system for use in a movable object which is steerable, comprising:
a display device which displays, as images, plural kinds of information regarding the movable object; and
a display data output device which supplies, for each preset scene, an image to be displayed by the display device to the display device,
the display data output device including:
a first memory section which stores data required for the display device to display all scenes;
a second memory section which stores data sent from the first memory section; and
a display data generating means for (i) generating display data, when obtaining information regarding the movable object, by reading out data, from the data sent to the second memory section, corresponding to information obtained regarding the movable object, and (ii) supplying the display data to the display device,
the display data generating means causing (i) only data of an image, out of the data stored in the first memory section, which image is to be displayed at startup of the display system to be sent to the second memory section at the startup of the display system and (ii) the display data to be generated in accordance with the data which has been sent to the second memory section.

2. The display system as set forth in claim 1, wherein:
the first memory section stores data required for displaying each scene in addition to data relating to startup of the display system; and
after the startup of the display system, the display data generating means (i) causes, when obtaining information relating to a scene, data corresponding to the scene to be sent from the first memory section to the second memory section and (ii) generates the display data in accordance with the data which has been sent to second memory section.

3. The display system as set forth in claim 1 or 2, wherein:
after the startup of the display system, the display data generating means (i) judges, when obtaining information relating to a scene, whether or not data corresponding to the scene is stored in the second memory section, (ii) causes the data to be sent from the first memory section to the second memory section, in a case where it is determined that the data is not stored in the second memory section, and (iii) reads out the data from the second memory section so as to generate the display data in accordance with the data thus read out, in a case where it is determined that the data is stored in the second memory section.

4. The display system as set forth in any one of claims 1 through 3, wherein:
the data, stored in the first memory section, of an image to be displayed at the startup of the display system is made up of data in which (i) frequency of use in displaying each scene is not less than a predetermined number of times and (ii) a data capacity is not more than a predetermined capacity.

5. The display system as set forth in any one of claims 1 through 3, wherein:
the data, stored in the first memory section, of an image to be displayed at the startup of the display system is determined based on a relation between (i) capacity of data sent from the first memory section to the second memory section and (ii) time required for sending the data.

6. The display system as set forth in any one of claims 1 through 5, wherein:
the display data generating means includes a simplified sequencer, and
the simplified sequencer sends data stored in the first memory section to the second memory section.

7. The display system as set forth in any one of claims 1 through 6, wherein the movable object is a vehicle.

8. A display data output device, for use in a steerable movable object, which supplies, for each preset scene, an image to be displayed by a display device to the display device, the display device displaying, as images, plural kinds of information regarding the movable object,
said display data output device, comprising:
a first memory section which stores data required for the display device to display all scenes;
a second memory section which stores data sent from the first memory section; and
a display data generating means for (i) generating display data, when obtaining information regarding the movable object, by reading out data, from the data sent to the second memory section, corresponding to information obtained regarding the movable object, and (ii) supplying the display data to the display device,
the display data generating means causing (i) only data of an image, out of the data stored in the first memory section, which image is to be displayed at startup of the display system to be sent to the second memory section at the startup of the display system and (ii) the display data to be generated in accordance with the data which has been sent to the second memory section.

9. The display data output device as set forth in claim 8, wherein:
the first memory section stores data required for displaying each scene in addition to data relating to startup of the display system; and
after the startup of the display system, the display data generating means (i) causes, when obtaining information relating to a scene, data corresponding to the scene to be sent from the first memory section to the second memory section and (ii) generates the display data in accordance with the data which has been sent to second memory section.

10. The display data output device as set forth in claim 8 or 9, wherein:
after the startup of the display system, the display data generating means (i) judges, when obtaining information relating to a scene, whether or not data corresponding to the scene is stored in the second memory section, (ii) causes the data to be sent from the first memory section to the second memory section, in a case where it is determined that the data is not stored in the second memory section, and (iii) reads out the data from the second memory section so as to generate the display data in accordance with the data thus read out, in a case where it is determined that the data is stored in the second memory section.

11. The display data output device as set forth in any one of claims 8 through 10, wherein:
the data, stored in the first memory section, of an image to be displayed at the startup of the display system is made up of data in which (i) frequency of use in displaying each scene is not less than a predetermined number of times and (ii) a data capacity is not more than a predetermined capacity.

12. The display data output device as set forth in any one of claims 8 through 10, wherein:
the data, stored in the first memory section, of an image to be displayed at the startup of the display system is determined based on a relation between (i) capacity of data sent from the first memory section to the second memory section and (ii) time required for sending the data.

13. The display data output device as set forth in any one of claims 8 through 12, wherein:
the display data generating means includes a simplified sequencer, and
the simplified sequencer sends data stored in the first memory section to the second memory section.

14. The display data output device as set forth in any one of claims 8 through 13, wherein the movable object is a vehicle.

15. A display control device in a display data output device for use in a steerable movable object, the display data output device supplying, for each preset scene, an image to be displayed by a display device to the display device, the display device displaying, as images, plural kinds of information regarding the movable object,
said display data output device, comprising:
a first memory section which stores data required for the display device to display all scenes;
a second memory section which stores data sent from the first memory section; and
a display data generating means for (i) generating display data, when obtaining information regarding the movable object, by reading out data, from the data sent to the second memory section, corresponding to information obtained regarding the movable object, and (ii) supplying the display data to the display device,
said display control device controlling the display data generating means to cause (i) only data of an image, out of the data stored in the first memory section, which image is to be displayed at startup of the display system to be sent to the second memory section at the startup of the display system and (ii) the display data to be generated in accordance with the data which has been sent to the second memory section.

16. The display control device as set forth in claim 15, wherein:
the first memory section stores data required for displaying each scene in addition to data relating to startup of the display system; and
after the startup of the display system, said display control device controls the display data generating means to (i) cause, when obtaining information relating to a scene, data corresponding to the scene to be sent from the first memory section to the second memory section and (ii) generate the display data in accordance with the data which has been sent to second memory section.

17. The display control device as set forth in claim 15 or 16, after the startup of the display system, controlling the display data generating means to (i) judge, when obtaining information relating to a scene, whether or not data corresponding to the scene is stored in the second memory section, (ii) cause the data to be sent from the first memory section to the second memory section, in a case where it is determined that the data is not stored in the second memory section, and (iii) read out the data from the second memory section so as to generate the display data in accordance with the data thus read out, in a case where it is determined that the data is stored in the second memory section.

18. The display control device as set forth in any one of claims 15 through 17, wherein:
the data, stored in the first memory section, of an image to be displayed at the startup of the display system is made up of data in which (i) frequency of use in displaying each scene is not less than a predetermined number of times and (ii) a data capacity is not more than a predetermined capacity.

19. The display control device as set forth in any one of claims 15 through 17, wherein:
the data, stored in the first memory section, of an image to be displayed at the startup of the display system is determined based on a relation between (i) capacity of data sent from the first memory section to the second memory section and (ii) time required for sending the data.

20. The display control device as set forth in any one of claims 15 through 19, wherein:
the display data generating means includes a simplified sequencer, and
the simplified sequencer sends data stored in the first memory section to the second memory section.

21. The display control device as set forth in any one of claims 15 through 19, wherein the movable object is a vehicle.

22. A display control method for controlling a display data output device for use in a steerable movable object, the display data output device supplying, for each preset scene, an image to be displayed by a display device to the display device, the display device displaying, as images, plural kinds of information regarding the movable object,
said display data output device, comprising:
a first memory section which stores data required for the display device to display all scenes;
a second memory section which stores data sent from the first memory section; and
a display data generating means for (i) generating display data, when obtaining information regarding the movable object, by reading out data, from the data sent to the second memory section, corresponding to information obtained regarding the movable object, and (ii) supplying the display data to the display device,
said display control method comprising the step of:
controlling the display data generating means to cause (i) only data of an image, out of the data stored in the first memory section, which image is to be displayed at startup of the display system to be sent to the second memory section at the startup of the display system and (ii) the display data to be generated in accordance with the data which has been sent to the second memory section.

23. A display control program which causes a computer to serve as means of a display control device as set forth in any one of claims 15 through 21.

24. A computer-readable recording medium in which a display control program as set forth in claim 23 is recorded.
